# EUROPEAN PATENT SPECIFICATION

(11) **EP 2 611 737 B1**
(45) Date of publication and mention of the grant of the patent: **29.11.2017**
(21) Application number: 11822229.8
(22) Date of filing: 02.09.2011
(51) Int. Cl.: C02F 1/32, F21V 31/00, H01J 61/50, F21V 25/12, H01R 33/965

(54) **FLAME PROOF REACTOR AND SYSTEM FOR TREATING LIQUIDS**
FEUERFESTER REAKTOR UND SYSTEM ZUR BEHANDLUNG VON FLÜSSIGKEITEN
RÉACTEUR IGNIFUGÉ ET SYSTÈME POUR TRAITER DES LIQUIDES

(30) Priority: 03.09.2010 SE 1000897
(43) Date of publication of application: 10.07.2013
(73) Proprietor: AlfaWall Aktiebolag, 147 41 Tumba (SE)
(72) Inventor: BERG, Magnus, S-128 69 Sköndal (SE)
(74) Representative: Alfa Laval Attorneys
(86) International application number: PCT/SE2011/051059
(87) International publication number: WO 2012/030294

(56) References cited:
- DE-A1- 19 753 505
- DE-C1- 3 910 872
- DE-C1- 3 943 065
- KR-B1- 100 837 044
- US-A- 4 828 508
- US-A- 5 030 125
- US-A- 5 832 361
- US-A- 6 039 460
- US-A1- 2003 178 924
- US-A1- 2004 195 954
- US-A1- 2009 321 365

## Description

The present invention relates to a flame proof UV-reactor for treating liquids, such as ballast water, comprising a reactor house with reactor walls, an inlet pipe and an outlet pipe for the liquid to be treated, a number of UV-treatment units attached inside said reactor house comprising elongated UV-lamps for providing UV-radiation in the interior of said reactor house protected by elongated glass tubes surrounding said elongated UV-lamps and sealing means and a flame proof system for treatment of liquids comprising such a flame proof UV-reactor.

### BACKGROUND OF THE INVENTION

There is a lot of development regarding treatment of liquids for purification and removal of harming substances and organisms, such as for example ballast water treatment. Systems are being developed that are to be integrated in the ballast water systems of the ships in order to treat the ballast water during ballasting and de-ballasting.

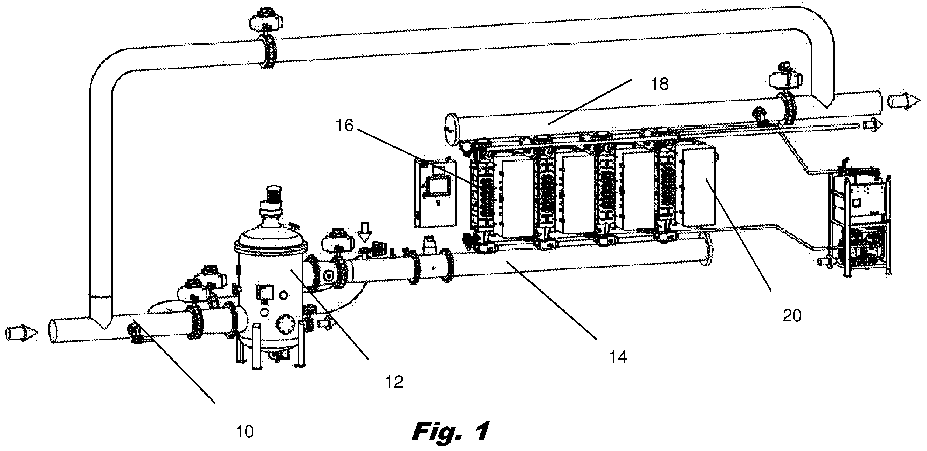

The document US2009/0321365 A1 to Eriksson et al. describes a typical system known from the prior art. The document US6039460 to Ng et al. describes a tubular UV-lamp used in these systems. A new system has been developed by the applicant of the present patent application. The system utilizes the AOT (Advanced Oxidation Technology) for water treatment, producing short lived radicals to react with organic substances. Figure 1 shows a system where the present invention may be used. The system shown in Fig. 1 is used for purifying ballast water in a ship. A pipe 10 may be connected to either an inlet for sea water when ballasting or the ballast water tanks when de-ballasting. When ballasting, the water passes a filter 12 for removing larger particles and organisms, and is then fed via the inlet pipe 14 to a number of AOT reactors 16 for treatment of ballast water where each reactor contains a number of UV generating lamps. After treatment water is then fed via pipe 18 to either ballast tanks when ballasting or to the sea when de-ballasting.

A drive unit is connected to each UV lamp of a reactor for operating it, which drive units are placed in a lamp drive cabinet 20 adjacent each rector. The operation of the UV lamps requires that each drive unit provides enough power to the lamps. This in turn means that the drive units emit quite a lot of heat inside the cabinet, which heat has to be taken care of in order not to overheat the components inside the cabinet.

Also the UV lamps inside the reactors emit a lot of energy when treating the ballast water, which energy also generates a lot of heat inside the reactors. The heat inside the reactors must not exceed certain temperature levels or the rectors will be overheated. In many instances the temperature of the UV lamps can be about 800°C and can thus be a potential source of ignition within the lamps.

In all, both the heat from the lamp drives and from the reactors may be dangerous in hazardous environments that may contain flammable or explosive gases or liquids, such as the interior of ships arranged with ballast water tanks and in many cases it is not possible to place the cabinets or reactors in compartments in a ship that are regarded as hazardous. There is thus a demand that vital components of the ballast water treatment system are designed explosion proof, or EX proof.

Therefore, one problem of the present invention is the environment surrounding an UV-reactor which is considered to be a hazardous area, since hazardous gases easily can explode due to ignition from different electrical sources and from the UV-lamps within the reactor. As mentioned above the UV-lamps are potential source of ignition because they will be about 800°C hot during operation. Legislation will also limit the use of such dangerous equipment in areas which people would occupy if there are no safe guard installations.

### THE INVENTION

Accordingly the present invention provides a solution to the technical problems by a new modified UV-reactor and a new system comprising the UV-reactor.

The aim of the present invention is to provide a reactor for treating ballast water that can be classified as explosion or EX proof, i.e. a reactor that can be positioned in environments that are regarded as hazardous in view of the risk of explosions.

This aim is obtained according to the invention with a system comprising the features of the independent patent claim. Preferable embodiments of the invention form the subject of the dependent patent claims.

The present invention relates to a flame proof UV-reactor for treating liquids, such as ballast water, initially mentioned, wherein each UV-treatment unit comprises also at least one UV-generator connection means, wherein the UV-generator connection means comprises sockets and caps, a tubular attachment post, a tubular holder member and a cover, and has flame-proof gaps to reduce the risk of igniting a surrounding explosive atmosphere, wherein each flame-proof gap is formed by the contact area of the tubular attachment post and the tubular holder member, or the tubular holder member and the cover and is extending from the inside of the reactor to the surrounding atmosphere, wherein said sealing means comprises an O-ring arranged between outer surface of the elongated glass tube and the tubular attachment post for holding the elongated glass tubes, wherein a check valve is arranged on the inlet pipe for liquid to secure that the reactor is filled with liquid to be treated, and wherein at least one temperature switch is arranged for detecting the temperature of the liquid within the flame proof reactor and at least one liquid level sensor is arranged for detecting the level of said liquid.

Preferably the elongated glass tubes are of quarts glass.

The internal explosion pressure is defined as 1.5 x pressure of hazardous gas, preferably 1.5 x pressure of hydrogen gas, and the internal explosion pressure may be up to 20 Bar, preferably up to 16 Bar.

The present invention relates also to a flame proof system for treatment of liquids, such as ballast water, which system comprise a flame proof UV-reactor according to the invention, at least one lamp drive cabinet and at least one check valve on the inlets for liquids to secure that the reactor is filled with liquids to be treated, which lamp cabinet comprises drive means connected to the UV-generator connection means for energizing said UV-treatment units

In the system according to the invention is at least one source of pressurized gas arranged to said lamp drive cabinet for creating an over-pressure, or is pressurized gas provided to the lamp drive cabinet from a central source of pressurized gas.

The system further comprises at least one liquid level sensor for detecting the levels of the liquids within the flame proof reactor and/or at least one temperature switch for detecting the temperature of the liquids within the flame proof reactor. Control means are also comprised in the system for controlling and monitoring flow of gas to said lamp drive cabinet. In the system according to the invention the at least one temperature switch and/or the at least one liquid level sensor are arranged to send signals to a control unit and/or to a hardwired safe control system which shut down the system upon failure.

Thus, the ballast water acts like a flame arrestor if an explosion should occur inside quartz sleeve. Since the system is equipped with a check valve on the inlet pipe it is possible to assure that the water level is acceptable, i.e. the reactor house is filled. If the water level in the reactor is too low or the temperature is too high, the lamps will immediately be shut off. The temperature switches, preferable two temperature switches, will assure that the reactor is adequately cooled by the ballast water.

The present invention comprises a safety control system which has been design to ensure that the reactor does not overheat. This will work as a separate system separate from the normal control system and will shut down the reactor if the normal control system fails to shut down. Pure ballast control system may be based on safety relays and may be hardwired to avoid the need of a separate validation of the software. All function in the safety system is using redundancy to ensure one fault tolerance.

Pure ballast is an AOT system with UV lamps. The quartz sleeves that surround the lamps need cooling from the ballast water. The ballast water also acts like a flame arrestor if an explosion should occur inside the quarts sleeves. The system is equipped with a check valve and double water level switches on every reactor to assure that there is water inside the reactor when the lamps are lighted. Two temperature switches will assure that the reactor is adequately cooled by the ballast water. If the water level in the reactor is too low or the temperature is too high, the lamps will immediately shut off. The shut of is handled both by the normal control system and by the hardwired safe control system with one fault tolerance.

The lamp drive cabinet is a pressurized enclosure, which assures that hazardous gas can't penetrate it. The enclosure can be pressurized with a constant overpressure which will demand an enclosure with no leakage. Normally an inert gas is used, but also air is possible. Another way to pressurize the enclosure is with leakage compensation. A small flow of air taken from outside hazardous zone or inert gas flows through the enclosure. A spark arrestor can be applied on the outlet. It is preferred to use a certified Exp control unit to handle and monitor the pressurization. This unit is then a part of the certification of the enclosure.

When the pressurizing starts at system start-up, the enclosure first has to be purged. A volume of at least 5 times the enclosures volume shall be used to assure that no hazardous gas is present in the enclosure when the power to the internal components is turned on. The pressure during purging is about 10 mbar. During normal operation the overpressure inside the enclosure is about 2 mbar. The enclosure has to be designed to withstand a pressure of 1.5 times maximum overpressure or minimum 2mbar. Purging has to be performed to assure that all internal compartments are vented. Components with a free internal volume less than 20 cm³ are not considered to be internal compartments requiring purging as long as the total volume of all such components is not more than 1 % of the free internal volume of the pressurized equipment.

Inside an enclosure, components are allowed to be hotter than the atmosphere outside (defined by the temperature class). If the enclosure contains components that can be hotter, it is not allowed to open the enclosure until they have cooled down below certified temperature limit.

In case of loss of pressurization, the power to the enclosure will be turned off immediately. The surrounding atmosphere will slowly penetrate the cabinet.

The UV-generator connection mean has to be flameproof and withstand an internal explosion without the risk of igniting a surrounding explosive atmosphere. Therefore, the -generator connection mean has to be built in a robust way and the passages that are needed shall have a flame path or a flame proof gap that is long and narrow enough to cool down the explosion before it reaches any atmosphere surrounding the UV-generator connection means. The reactor is also designed to withstand an internal explosion inside the quarts sleeves with a lamp as ignition source. It is assumed that the reactor is always filled with water and the water will work as a flame arrestor to the piping's. That is assured by a check valve and double level switches.

One aspect of the invention is characterised by a system for treating liquids, such as ballast water, comprising a treatment reactor having an inlet and an outlet for the liquid to be treated, a number of UV treatment units attached inside said reactor comprising UV generators for providing UV radiation in the interior of said rector, which UV radiation is active in treating said liquid, and drive means capable of energizing said UV treatment units, characterised in that said reactor is designed to prevent sharp gas pressure increase, due to an explosion inside said reactor, from escaping out of said reactor.

According to yet another aspect of the invention, said UV treatment units extend through the walls of the reactor and are provided with reactor attachment means, wherein said attachment means are arranged with a number of flame-proof gaps, capable of handling highly pressurized gas inside the reactor.

According to a further aspect of the invention, said UV treatment units further comprise protective quarts glass or glass members surrounding said UV generators, and wherein said reactor attachment means is also arranged for attaching said glass members, wherein said attachment means are arranged with a number of flame-proof gaps, capable of handling highly pressurized gas inside said glass members.

According to yet a further aspect of the invention, said drive means for energizing said UV treatment units are positioned inside enclosures, which enclosures are placed adjacent said reactors, comprising means for creating over-pressure inside said enclosures for preventing hazardous gas from entering said enclosures.

According to another aspect of the invention, a source of pressurized gas is arranged to said enclosure for creating an over-pressure.

According to a further aspect of the invention, it further comprises control means for controlling and monitoring the flow of gas to said enclosure.

There are a number of advantages with the present invention. By designing the treatment system to be capable of being placed in so called hazardous areas, the system and its components are Ex-proof. One measure is then to strengthen the reactor itself by reinforcing the walls of the reactor to withstand very high pressure increases due to explosions inside the reactor, and in particular inside the UV treatment units.

Since the UV generating means are positioned inside the reactor and extend through the walls of the reactor and are attached thereto, these UV generating means and their attachments also need to be able to withstand the high pressures, which may reach up to 16 bars. In this aspect the flame-proof gaps of the attachment means provide the necessary security. This is also the case for the protective tubes that surround and protect the UV generating means. Inside these tubes, an explosion may occur due to the high temperatures of the UV generating means, whereby the attachment of the tubes also are arranged with flame-proof gaps.

In order to further increase the safety of the system also the enclosures or cabinets that comprise the drive units for the UV generating means are designed explosion proof, especially since these enclosures also often are positioned adjacent the reactors in hazardous areas. In order to be able to handle hazardous gasses, the enclosures are provided with means for creating an over-pressure inside the enclosure, thereby preventing gas from entering the enclosure. This is preferably done by an add-on unit attached to each enclosure. The system may also be provided with a suitable control and monitoring system capable of handling different functions ensuring the safety of the system.

Of course the present invention also comprises a reactor as well as an enclosure as such designed to be parts of the explosion proof system.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
Fig. 1 is a schematic view of a unit for treating ballast water in which the present invention may be incorporated, and
Fig. 2 shows a schematic view of a reactor for treating ballast water according to the present invention, and
Fig. 3 shows a detailed view of an attachment of UV lamps used in a reactor in a unit according to Fig. 1 and modified according to the present invention, and

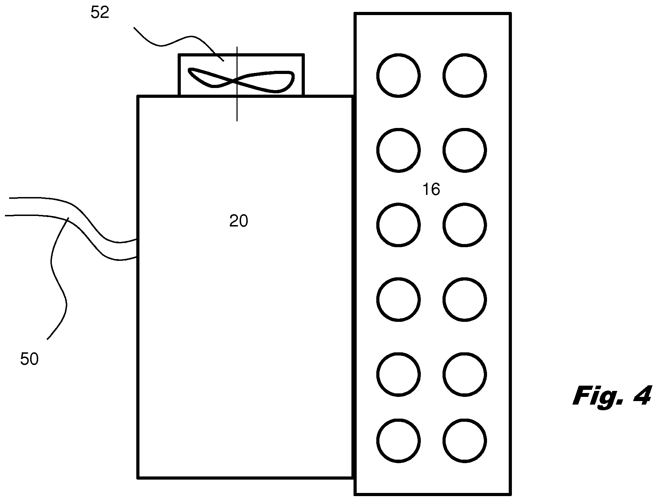

Fig. 4 shows a detailed view of a UV lamp drive cabined modified according to the present invention, and
Fig. 5 shows a schematic view of a unit for treating ballast water according to the present invention, and

### DETAILED DESCRIPTION OF THE INVENTION

The present invention is connected to a treatment system for liquids, such as ballast water, schematically shown in Fig. 1, which is successfully used in ships for treating ballast water.

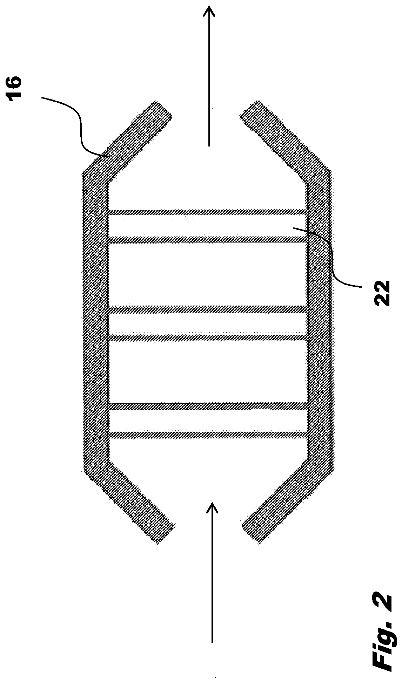

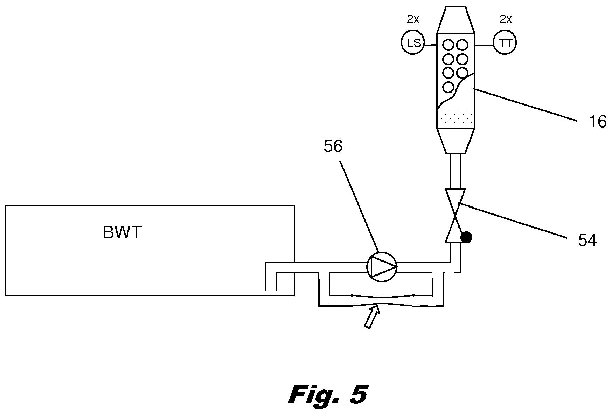

According to the present invention, a UV lamp AOT reactor 16 is modified such that the walls of the reactor 16 are made to withstand high interior pressures that may occur due to explosions. This is preferably done by making the walls of a thicker and/or higher strength material, Fig. 2. Different welding or other joining techniques may also be employed for handling such high pressures without the joining areas of the reactor 16 breaking. In order to minimize the risk of explosive gases entering the interior of the reactor 16, a check valve 54 , shown in fig. 5, is placed on the inlet pipe 14 of the reactor 16 in order to ascertain that the reactor 16 is always filled with liquid. The control of the check valve 54 is performed by a suitable control system (not shown).

The system for treatment of liquids (such as ballast water) which is schematically shown in fig. 5, comprises a flame proof UV-reactor 16 , a lamp drive cabinet 20, which lamp drive cabinet 20 comprises drive means connected to the UV-generator connection means for energizing said UV-treatment units. The liquid to be treated is in this case ballast water sucked from a ballast water tank BWT by a pump 56.
The system further comprises (one or) two liquid level sensors LS for detecting the levels of the liquids within the flame proof reactor 16 and/or (one or) two temperature switches TT for detecting the temperature of the liquids within the flame proof reactor 16. Control means are also comprised in the system for controlling and monitoring flow of gas to said lamp drive cabinet 20. In the system according to the invention the at least one temperature switch TT and/or the at least one liquid level sensor LS are arranged to send signals to a control unit and/or to a hardwired safe control system which shut down the system upon failure.

Thus, the ballast water acts like a flame arrestor if an explosion should occur inside the quartz sleeve. Since the system is equipped with a check valve 54 on the inlet pipe 10 it is possible to assure that the water level is acceptable, i.e. the reactor house 16 is filled. If the water level in the reactor is too low or the temperature is too high, the lamps 22 will immediately be shut off. The temperature switches TT, preferable two temperature switches, will assure that the reactor 16 is adequately cooled by the ballast water.

The present invention comprises a safety control system which has been designed to ensure that the reactor does not overheat. This will work as a separate system separate from the normal control system and will shut down the reactor 16 if the normal control system fails to shut down. The control system may be based on safety relays and may be hardwired to avoid the need of a separate validation of the software. All function in the safety system is using redundancy to ensure one fault tolerance.

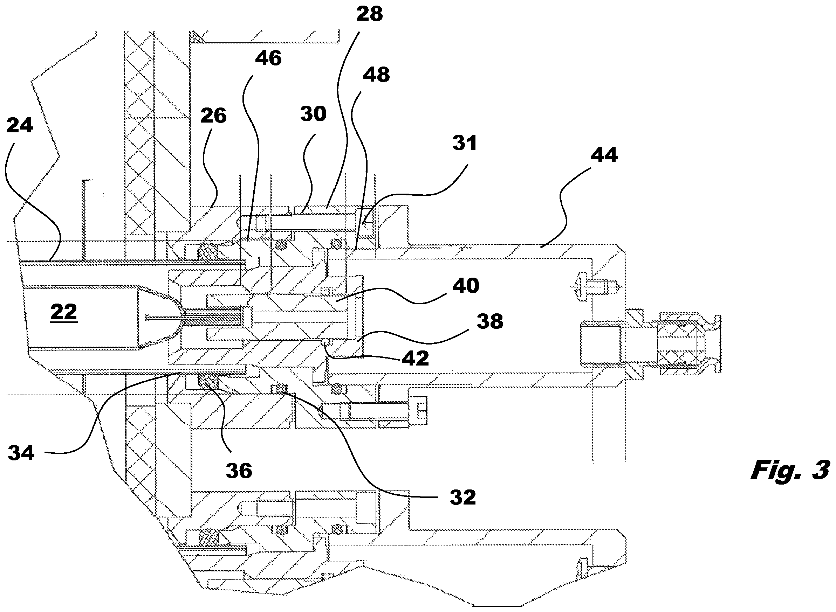

Further UV lamps 22 for treating liquid inside the reactor 16 are designed generally elongated and are attached to the walls of the reactor 16 and pass through openings in the reactor walls. The lamps 22 are protected by protective members that are elongated glass tubes 24, preferably of quartz glass, which glass tubes 24 are also attached to the walls of the reactor 16 , as shown in Fig. 3. In the examples shown of the reactor 16 the lamps 22 are positioned generally perpendicular to the flow of the liquid to be treated, Fig. 2, but it is to be understood that other configurations may equally be employed.

According to the invention the attachment of the glass and the lamp comprises a tubular attachment post 26 fixed to the outer surface of the reactor wall. A lamp/glass holder unit is further arranged, comprising a generally tubular holder member 28 having a first diameter somewhat smaller than the inner diameter of the attachment post 26. The holder member 28 is arranged with a number of bores 30, which correspond to a number of threaded holes such that the holder member 28 may be bolted to the attachment post 26 by bolts 31. A sealing means in the form of an O-ring 32 is arranged between the attachment post 26 and the holder member 28. The holder member 28 is further arranged with an annular seat 34 for accommodating the end of the protective glass tube 24, where the latter is held in place by an O-ring 36 between the outer surface of the glass tube 24 and the attachment post 26.

The holder unit further comprises a central tubular lamp holding sleeve 38 positioned inside said holder member 28 for the lamp 22 with a central contact member 40. A vibration damping member 42 is arranged between the central contact member 40 and the lamp holding sleeve 38. The lamp holding sleeve 38 is further held in place by a cover 44 having an end surface pressing on the lamp holding sleeve 38. The cover 44 is bolted to the holder member 28 and a sealing O-ring 58 is placed between the two.

The flame proof UV-reactor 16 comprises further a reactor house with reactor walls, an inlet pipe 14 and an outlet pipe 18 for the liquid to be treated, a number of UV-treatment units attached inside said reactor house. The UV-treatment units comprise UV-generators, i.e. UV-lamps 22, for providing UV-radiation in the interior of said reactor house. Each UV-treatment unit comprise also of UV-generators connection means, preferably two UV-generators connection means, to withstand internal explosion pressure. The reactor 16 has a reinforcement of the reactor walls to withstand internal explosion pressure. The UV-generator connection means comprise sockets and caps. The UV-generator connection means are placed on adjacent sides of each UV-generator in said reactor house.

The internal explosion pressure is defined as 1.5 x pressure of hazardous gas, preferably 1.5 x pressure of hydrogen gas, and the internal explosion pressure may be up to 20 Bar, preferably up to 16 Bar.

Now if an explosion should occur in the interior of the reactor 16, and in particular inside the glass tube 24, the design of the lamp attachment, as can be seen in fig. 3, is such that a flame-proof gap 46 of a certain required length is provided between the attachment post 26 and the holder member 28, providing a flame-proof gap 46. Further, a flame-proof gap 48 of a certain required length is provided between the holder member 28 and the cover 44 for handling the explosion gases inside the protective glass. Also, any explosion gases are prevented from entering the reactor compartment due to that liquid is present on an inner side of the O-ring 36 holding the glass tube, whereby a flame arrester is provided.

With this arrangement, any pressure build-up inside the protective glass or eventually inside the reactor 16 should the pressure increase propagate to the interior of the reactor 16, can be handled in that the reactor 16 itself is reinforced and in that the attachments of the UV lamps 22 are provided with Ex-classed flame-proof gaps 46, 48. Each flame-proof gap 46, 48 is a flame path formed by the contact area of two adjacent parts (attachment post 26 and the holder member 28 and/or holder member 28 and the cover 44 resp.) of the connection means, pressed against each other, which path is steering the explosion gases in case of an explosion inside the reactor 16, and extending from the inside of the reactor 16 to the surroundings and is long and narrow enough to cool down the explosion gases before they reach the athmosphere.

Further, the system of the present invention comprises a number of lamp drive cabinets 20, corresponding to the number of reactors 16, where each cabinet 20 comprises a number of lamp drive units capable of energizing the lamps 22 such that they emit UV radiation inside the reactors 16 for the treatment of ballast water. The cabinets 20 are generally placed adjacent the reactor 16, i.e. in the hazardous environment and do also need to be Ex-proof. In order to handle this, each cabinet 20 is provided with a suitable inlet of pressurized air. This could have many suitable solutions such as preferably a fan 52 or the like communicating with the interior of the cabinet 20 for creating an over pressure inside the cabinet 20. It is also possible to arrange an air conduit 50 connected to the cabinet 20 having an inlet to the interior, where pressurized air is provided from a central source of pressurized air. The over pressure inside the cabinets 20 ensure that no hazardous gas can enter the interior, thereby minimizing the risk that gas can come in contact with hot components inside the cabinet 20.

Preferably the over pressure units are arranged with valves and control means for controlling the air flow, flow meters for monitoring the air flow, spark arrester etc. all arranged for providing and ensuring a minimized risk of hazardous gasses entering the interior of the cabinets.

It is to be understood that the embodiment described above and shown in the drawings is to be regarded only as a non-limiting example of the invention and that it may be modified in many ways within the scope of the patent claims.

## Claims

1. A flame proof UV-reactor (16) for treating liquids, such as ballast water, comprising a reactor house with reactor walls, an inlet pipe and an outlet pipe for the liquid to be treated, a number of UV-treatment units attached inside said reactor house comprising elongated UV-lamps (22) for providing UV-radiation in the interior of said reactor house protected by elongated glass tubes (24) surrounding said elongated UV-lamps and sealing means;
**characterised in that**
said each UV-treatment unit comprises also at least one UV-generator connection means (26, 28), wherein the UV-generator connection means (26, 28) comprises sockets and caps, a tubular attachment post (26), a tubular holder member (28) and a cover (44), and has flame-proof gaps (46, 48) to reduce the risk of igniting a surrounding explosive atmosphere,
wherein each flame-proof gap (46) is formed by the contact area of the tubular attachment post (26) and the tubular holder member (28), or the tubular holder member (28) and the cover (44) and is extending from the inside of the reactor (16) to the surrounding atmosphere,
wherein said sealing means comprises an O-ring (36) arranged between outer surface of the elongated glass tube (24) and the tubular attachment post (26) for holding the elongated glass tubes (24),
wherein a check valve (54) is arranged on the inlet pipe for liquid to secure that the reactor is filled with liquid to be treated,
and wherein at least one temperature switch is arranged for detecting the temperature of the liquid within the flame proof reactor and at least one liquid level sensor is arranged for detecting the level of said liquid.

2. A flame proof UV-reactor according to claim 1, wherein the elongated glass tubes (24) are quartz glass tubes.

3. A flame proof UV-reactor according to any one of the preceding claims, wherein the two UV-generator connection means are placed on adjacent sides of each UV-lamp in said reactor house.

4. A flame proof UV-reactor according to any one of the preceding claims, wherein the reactor has walls with a reinforcement to withstand an internal explosion pressure of up to 20 Bar.

5. A flame proof system for treatment of liquids, such as ballast water, comprising a flame proof reactor according to any one of claims 1-4, wherein at least one source of pressurized gas is arranged to said lamp drive cabinet for creating an over-pressure, or wherein pressurized gas is provided to the lamp drive cabinet from a central source of pressurized gas.

6. A flame proof system for treatment of liquids according to claim 5, wherein the system further comprises control means for controlling and monitoring flow of gas to said lamp drive cabinet.

7. A flame proof system for treatment of liquids according to any one of claims 5 - 6, wherein the at least one temperature switch and/or the at least one liquid level sensor are arranged to send signals to a control unit and/or to a hardwired safe control system which shut down the system upon failure.

## Patentansprüche

1. Flammfester UV-Reaktor (16) zur Behandlung von Flüssigkeiten, wie beispielsweise Ballastwasser, umfassend ein Reaktorgehäuse mit Reaktorwänden, ein Einlassrohr und ein Auslassrohr für die zu behandelnde Flüssigkeit, eine Anzahl von UV-Behandlungseinheiten, die in dem Inneren des Reaktorgehäuses befestigt sind, umfassend langgestreckte UV-Lampen (22), um im Inneren des Reaktorgehäuses UV-Strahlung bereitzustellen, die mit Hilfe von die langgestreckten UV-Lampen umschließenden, langgestreckten Glasröhren (24) und Dichtmitteln geschützt sind;
**dadurch gekennzeichnet, dass**
jede UV-Behandlungseinheit außerdem mindestens ein Mittel (26, 28) zum Anschluss des UV-Erzeugers aufweist, wobei das Mittel (26, 28) zum Anschluss des UV-Erzeugers Sockel und Fassungen, einen rohrförmigen Anschluss-Stutzen (26), ein rohrförmiges Halteteil (28) und eine Abdeckung (44) aufweist und flammfeste Zwischenräume (46, 48) hat, um die Gefahr eines Entflammens einer umgebenden explosiven Atmosphäre zu verringern,
wobei jeder flammfeste Zwischenraum (46) durch die Kontaktfläche des rohrförmigen Anschluss-Stutzens (26) und des rohrförmigen Halteteils (28) oder des rohrförmigen Halteteils (28) und der Abdeckung (44) gebildet wird und sich von der Innenseite des Reaktors (16) zu der umgebenden Atmosphäre erstreckt,
wobei das Dichtmittel einen O-Ring (36) umfasst, der zwischen der Außenfläche des langgestreckten Glasrohrs (24) und dem rohrförmigen Anschluss-Stutzen (26) zum Halten der langgestreckten Glasröhren (24) angeordnet ist,
wobei an dem Einlassrohr für Flüssigkeit ein Kotrollventil (54) angeordnet ist, um sicherzustellen, dass der Reaktor mit der zu behandelnden Flüssigkeit gefüllt wird,
und wobei mindestens ein Temperaturschalter angeordnet ist, um die Temperatur der Flüssigkeit im Inneren des flammfesten Reaktors zu erfassen, und mindestens ein Sensor für den Flüssigkeitsstand angeordnet ist, um den Stand der Flüssigkeit zu erfassen.

2. Flammfester UV-Reaktor nach Anspruch 1, wobei die langgestreckten Glasröhren (24) Quarzglasröhren sind.

3. Flammfester UV-Reaktor nach einem der vorgenannten Ansprüche, wobei die zwei Mittel zum Anschluss des UV-Erzeugers an benachbarten Seiten jeder UV-Lampe in dem Reaktorgehäuse angeordnet sind.

4. Flammfester UV-Reaktor nach einem der vorgenannten Ansprüche, wobei der Reaktor Wände mit einer Verstärkung hat, um einem inneren Explosionsdruck von bis zu 20 Bar standzuhalten.

5. Flammfestes System zur Behandlung von Flüssigkeiten, wie beispielsweise Ballastwasser, umfassend einen flammfesten UV-Reaktor nach einem der Ansprüche 1 bis 4, wobei an dem Lampenschaltschrank mindestens eine Quelle für Druckgas zum Erzeugen eines Überdrucks angeordnet ist oder wobei Druckgas von einer zentralen Quelle für Druckgas für den Lampenschaltschrank bereitgestellt wird.

6. Flammfestes System zur Behandlung von Flüssigkeiten nach Anspruch 5, wobei das System ferner Steuermittel umfasst, um den Fluss von Gas zu dem Lampenschaltschrank zu steuern und zu überwachen.

7. Flammfestes System zur Behandlung von Flüssigkeiten nach einem der Ansprüche 5 bis 6, wobei der mindestens eine Temperaturschalter und/oder der mindestens eine Sensor für den Flüssigkeitsstand angeordnet sind, um Signale zu einer Steuereinheit und/oder einem fest verdrahteten Sicherheitssteuersystem zu schicken, die im Versagensfall das System abschalten.

## Revendications

1. Réacteur UV ignifuge (16) pour traiter des liquides, tels que de l'eau de ballast, comprenant un logement de réacteur muni de parois de réacteur, d'un tuyau d'entrée et d'un tuyau de sortie pour le liquide à traiter, d'un certain nombre d'unités de traitement UV fixées à l'intérieur dudit logement de réacteur comprenant des lampes UV allongées (22) pour fournir un rayonnement UV à l'intérieur dudit logement de réacteur qui sont protégées par des tubes en verre allongés (24) qui entourent lesdites lampes UV allongées et un moyen d'étanchéité,
**caractérisé en ce que**
chacune desdites unités de traitement UV comprend également au moins un moyen de connexion de générateur d'UV (26, 28), dans lequel le moyen de connexion de générateur d'UV (26, 28) comprend des douilles et des capuchons, un pilier de fixation tubulaire (26), un élément de support tubulaire (28) et un capot (44), et comporte des espaces ignifuges (46, 48) de manière à réduire le risque d'enflammer une atmosphère explosive avoisinante ;
dans lequel chaque espace ignifuge (46) est formé par la zone de contact du pilier de fixation tubulaire (26) et de l'élément de support tubulaire (28), ou de l'élément de support tubulaire (28) et du capot (44), et s'étend depuis l'intérieur du réacteur (16) jusqu'à l'atmosphère avoisinante ;
dans lequel ledit moyen d'étanchéité comprend un joint torique (36) qui est agencé entre une surface externe du tube en verre allongé (24) et le pilier de fixation tubulaire (26) pour supporter les tubes en verre allongés (24) ;
dans lequel un clapet antiretour (54) est agencé sur le tuyau d'entrée pour le liquide de manière à assurer que le réacteur est rempli par le liquide à traiter ;
et dans lequel au moins un contacteur thermique est agencé pour détecter la température du liquide à l'intérieur du réacteur ignifuge et au moins un capteur de niveau de liquide est agencé pour détecter le niveau dudit liquide.

2. Réacteur UV ignifuge selon la revendication 1, dans lequel les tubes en verre allongés (24) sont des tubes en verre de quartz.

3. Réacteur UV ignifuge selon l'une quelconque des revendications précédentes, dans lequel les deux moyens de connexion de générateur d'UV sont placés sur des côtés adjacents de chaque lampe UV dans ledit logement de réacteur.

4. Réacteur UV ignifuge selon l'une quelconque des revendications précédentes, dans lequel le réacteur comporte des parois qui sont munies d'un renforcement de manière à supporter une pression d'explosion interne jusqu'à 20 bars.

5. Système ignifuge pour le traitement de liquides, tels que de l'eau de ballast, comprenant un réacteur ignifuge selon l'une quelconque des revendications 1 à 4, dans lequel au moins une source de gaz sous pression est agencée sur ladite armoire de commande de lampes pour créer une surpression, ou dans lequel un gaz sous pression est fourni à l'armoire de commande de lampes depuis une source centrale de gaz sous pression.

6. Système ignifuge pour le traitement de liquides selon la revendication 5, dans lequel le système comprend en outre un moyen de commande pour commander et surveiller un flux de gaz vers ladite armoire de commande de lampes.

7. Système ignifuge pour le traitement de liquides selon l'une quelconque des revendications 5 à 6, dans lequel l'au moins un contacteur thermique et/ou l'au moins un capteur de niveau de liquide est/sont agencé(s) de manière à envoyer des signaux à une unité de commande et/ou à un système de commande de sécurité câblé qui coupent le système suite à une défaillance.
